# EUROPEAN PATENT APPLICATION

(11) **EP 4 075 170 A1**
(43) Date of publication of application: **19.10.2022**
(21) Application number: 20898979.8
(22) Date of filing: 15.10.2020
(51) Int. Cl.: G01V 5/00

(54) **SECURITY INSPECTION DEVICE, SECURITY INSPECTION METHOD AND STORAGE SYSTEM**

(30) Priority: 11.12.2019 CN 201911271627
(71) Applicant: Tsinghua University, Haidian District, Beijing 100084 (CN); Nuctech Company Limited, TongFang Building Shuangqinglu Haidian District Beijing 100084 (CN)
(72) Inventor: JIN, Xin, Beijing 100084 (CN); SUN, Yunda, Beijing 100084 (CN); ZHANG, Li, Beijing 100084 (CN); CHEN, Zhiqiang, Beijing 100084 (CN); ZHAO, Tiao, Beijing 100084 (CN); SHEN, Le, Beijing 100084 (CN); CHANG, Ming, Beijing 100084 (CN); LIANG, Wuyang, Beijing 100084 (CN)
(74) Representative: Cabinet Beau de Loménie
(86) International application number: PCT/CN2020/121103
(87) International publication number: WO 2021/114858

(57) **Abstract**

According to the embodiments of the present disclosure, there is provided a security inspection device, a security inspection method, and a storage system. The security inspection device includes a ray source and a detector, and an inspection channel is defined between the ray source and the detector. The inspection channel includes, for example, two inspection channel segments, wherein the inspection channel segments are successively arranged, and an angle greater than zero is formed between extending directions of at least two inspection channel segments. The security inspection device further includes a conveying apparatus provided on the inspection channel. An absolute direction or orientation of the inspected object is kept unchanged during a process of being conveyed within the inspection channel.

## Description

### CROSS REFERENCE TO RELATED APPLICATIONS

This application claims priority to Chinese patent application No. 201911271627.X filed on December 11, 2019 in China National Intellectual Property Administration, the content of which is incorporated herein by reference in its entirety.

### TECHNICAL FIELD

The present disclosure relates to a field of security inspection, and in particular, to a security inspection device and a security inspection method.

### BACKGROUND

At present, a principle of X-ray transmission imaging is mainly used in a commonly used security inspection device for large container cargos, which makes use of different attenuation intensities of different substances to X-rays, and manually judges an image by obtaining an X-ray perspective view, so as to determine whether the cargos in a container include contraband. CT (Computed Tomography) imaging is a commonly used imaging technology which uses a precisely collimated X-ray, γ-ray, ultrasonic wave, etc., together with a detector having a high sensitivity to perform a section scan surrounding an inspected object one by one, and to obtain the computed tomography image.

However, an image quality of the X-ray transmission imaging is generally not ideal for a large object such as the container. There is a need for a security inspection device having an improved performance for use in the security inspection for large cargos.

### SUMMARY

The embodiments of the present disclosure provide a security inspection device, including:
a ray source configured to emit a ray beam;
a detector configured to receive the ray beam, wherein an inspection channel is defined between the ray source and the detector, wherein the inspection channel includes N inspection channel segments, the N inspection channel segments are successively arranged such that an inspected object is conveyed in the N inspection channel segments, an angle greater than zero is formed between extending directions of at least two inspection channel segments of the N inspection channel segments, and wherein N is an integer of 2 or greater than 2; and
a conveying apparatus configured to convey the inspected object on the inspection channel, wherein an absolute direction or orientation of the inspected object is kept unchanged during a process of being conveyed within the inspection channel.

In an embodiment, the conveying apparatus includes a plurality of sub-conveying apparatuses, wherein at least one sub-conveying apparatus is provided in each of the N inspection channel segments, and the plurality of sub-conveying apparatuses are configured to sequentially convey the inspected object within the inspection channel.

In an embodiment, the inspection channel includes a first inspection channel segment extending in a horizontal direction, and a second inspection channel segment extending in a vertical direction.

In an embodiment, the inspection channel includes a third inspection channel segment, the third inspection channel segment is obliquely arranged between the first inspection channel segment and the second inspection channel segment and connecting the first inspection channel segment with the second inspection channel segment.

In an embodiment, the third inspection channel segment is at a 135 degree angle to the first inspection channel segment.

In an embodiment, the ray source is configured to be rotatable and/or translatable so as to be able to emit the ray beam directly facing each N inspection channel segment, respectively, through rotation and/or translation.

In an embodiment, each of the plurality of sub-conveying apparatuses includes a hollow bracket for supporting the inspected object, the hollow bracket has two ends for supporting the inspected object and a middle hollow portion, a length direction of the hollow bracket may be adjusted according to a length of the inspected object such that the inspected object is only supported on the two ends of the hollow bracket during inspection; and
the length direction of the hollow bracket is perpendicular to a conveying direction of the plurality of sub-conveying apparatuses.

In an embodiment, the plurality of sub-conveying apparatuses include a crane configured to translate and/or lift/drop the inspected object by means of suspension.

In an embodiment, the plurality of sub-conveying apparatuses include a cart configured to translate the hollow bracket.

In an embodiment, the ray source is provided with a plurality of sub-ray sources, and the plurality of sub-ray sources are arranged in a direction substantially perpendicular to an extending direction of the inspection channel so as to cover a part or all of a transverse range of the inspection channel segments.

In an embodiment, the security inspection device includes a plurality of ray sources, and each of the N inspection channel segments is provided with one ray source.

In an embodiment, each of the plurality of ray sources is provided with a plurality of sub-ray sources, the plurality of sub-ray sources are arranged in a direction transverse to the extending direction of the inspection channel so as to cover a part or all of a transverse range of the inspection channel segments.

In an embodiment, the detector includes a plurality of detector arrays, and each inspection channel segment is provided with at least one detector array so as to receive the ray beam penetrating the inspected object.

In an embodiment, the detector arrays are movable in a direction perpendicular to a movement direction of the inspected object.

In an embodiment, the ray source is an X-ray accelerator including one or more of a single-energy X-ray accelerator, a dual-energy X-ray accelerator, or a multi-energy spectrum X-ray accelerator.

In an embodiment, the security inspection device further includes a processor configured to synthesize inspection results of the N inspection channel segments into a cross-sectional image of the inspected object.

In an embodiment, the conveying apparatus is capable of reciprocating the inspected object.

In an embodiment, the inspected object is a container.

An aspect of the present disclosure further provide a security inspection method using the security inspection device described above, wherein the security inspection method includes:
conveying an inspected object sequentially in N inspection channel segments;
emitting, by using a ray source, a ray beam to irradiate the inspected object;
using a detector to receive a radiation; and
synthesizing a computed tomography image of the inspected object based on the radiation received by the detector.

In an embodiment, the security inspection method includes:
placing the inspected object in a first inspection channel segment of the inspection channel before emitting, by using the ray source, the ray beam to irradiate the inspected object, and a short side of the inspected object is substantially parallel to an extending direction of the first inspection channel segment.

An aspect of the present disclosure further provides a storage system, including:
a storage shelf for storing articles, wherein the storage shelf is capable of moving any one of the articles to a predetermined position as required; and
the security inspection device according to claim 1, wherein inspection channel segments of the security inspection device are distributed in the storage shelf,
wherein the storage system allows any one of the articles to be moved to pass through at least two of the inspection channel segments extending in different directions.

### BRIEF DESCRIPTION OF THE DRAWINGS

FIG. 1 is a schematic diagram of a part of a security inspection device according to an embodiment of the present disclosure;
FIG. 2 is a schematic diagram of a part of a security inspection device according to an embodiment of the present disclosure;
FIG. 3 is a schematic diagram of a part of a security inspection device according to an embodiment of the present disclosure;
FIG. 4 is a schematic diagram of a part of a security inspection device according to an embodiment of the present disclosure;
FIG. 5 is a schematic diagram of an arrangement of a ray source on a security inspection channel segment of a security inspection device according to an embodiment of the present disclosure;
FIG. 6 is a schematic diagram of a part of a security inspection device according to an embodiment of the present disclosure, wherein an inspected object travels in a security inspection channel;
FIG. 7 is a schematic diagram of a part of a security inspection device according to an embodiment of the present disclosure, wherein an inspected object travels in a security inspection channel;
FIG. 8 is a schematic diagram of a part of a security inspection device according to an embodiment of the present disclosure, wherein an inspected object travels in a security inspection channel;
FIG. 9 is a schematic diagram of a security inspection device according to an embodiment of the present disclosure, wherein a ray of a ray source is irradiated on a security inspection channel segment;
FIG. 10 is a schematic diagram of a security inspection device according to an embodiment of the present disclosure, wherein a ray of a ray source is irradiated on two vertical security inspection channel segments;
FIG. 11 is a schematic diagram of a security inspection device according to an embodiment of the present disclosure, wherein a ray of a ray source is irradiated on N security inspection channel segments;
FIG. 12 is a schematic diagram of a storage system according to an embodiment of the present disclosure; and
FIG. 13A - FIG. 13D show various application forms of a storage system according to the present disclosure.

### DETAILED DESCRIPTION OF EMBODIMENTS

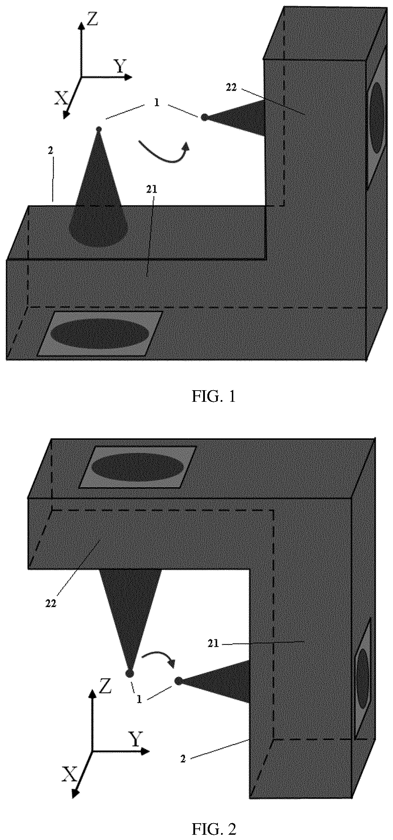

According to an embodiment of the present disclosure, there is provided a security inspection device, including: a ray source 1 configured to emit, for example, an X-ray beam or a γ ray; a detector configured to receive a ray beam, wherein an inspection channel 2 is defined between the ray source 1 and the detector. FIG. 1 shows a part of the security inspection device. As shown in FIG. 1, the inspection channel 2 includes a first inspection channel segment 21 extending in a Y direction (e.g., a horizontal direction) and a second inspection channel segment 22 extending in a Z direction (e.g., a vertical direction). Here, the Y direction and the Z direction are two directions perpendicular to each other, or in other words, the first inspection channel section 21 and the second inspection channel section 22 form a right angle. The security inspection device further includes a conveying apparatus within the inspection channel 2, the conveying apparatus is provided on the inspection channel 2 for conveying an inspected object. In the embodiment shown in FIG. 1, the conveying apparatus includes a first sub-conveying apparatus in the first inspection channel segment 21 and a second sub-conveying apparatus in the second inspection channel segment 22. FIG. 1 does not specifically show the conveying apparatus. Advantageously, the first inspection channel segment 21 and the second inspection channel segment 22 extend in a straight line, and the inspected object is respectively conveyed by the first sub-conveying apparatus in the first inspection channel segment 21 and the second sub-conveying apparatus in the second inspection channel segment 22 in the straight line. An absolute direction or orientation of the inspected object is not changed when the inspected object is conveyed in the first inspection channel segment 21 and the second inspection channel segment 22. The absolute direction or orientation refers to a direction or orientation of the inspected object relative to the ground or another absolutely stationary reference object. For example, when the inspected object enters the inspection channel with an end thereof facing north, then the end of the inspected object is kept facing north during a movement in an entire inspection channel. FIG. 1 further schematically shows a form of the radiation beam emitted by the radiation source. A projection of the radiation beam on a plane is an ellipse, that is, an opening angle or amplitude of the radiation beam in the Y direction (a conveying direction of the inspected object) is larger than that in the X direction. However, in another embodiment, the opening angle or amplitude of the radiation beam in the X direction may be larger than that in the Y direction (the conveying direction of the inspected object).

In the present embodiment, for example, the inspected object is arranged in the first inspection channel segment 21 as shown in FIG. 1, and a length direction of the inspected object is the same as the X direction. When the inspected object is conveyed into the second inspection channel segment 22, the absolute direction or orientation of the inspected object is not changed, and the length direction thereof is still the same as the X direction shown in FIG. 1. In the present embodiment, when the inspected object is moved (in the Y direction) within the first inspection channel segment 21 by the first sub-conveying apparatus, the inspected object passes through the radiation beam emitted by the radiation source. Specifically, the radiation beam is incident from a top side or upper side (of, for example, an inspected object with an irregular top shape) of the inspected object, and is emitted from a bottom side of the inspected object, such that ray transmission information of a part of the inspected object is obtained. When the inspected object is moved by the first sub-conveying apparatus, the radiation beam may scan an entire inspected object, such that all information of the inspected object when being irradiated from the top side of the inspected object is obtained. The inspected object then passes through the second inspection channel segment 22. As the absolute direction or orientation of the inspected object is not changed, the length direction of the inspected object is kept the same as the X direction within the second inspection channel segment 22. At this time, the radiation beam is incident from, for example, a left side surface (between the top side and the bottom side) of the inspected object, and is emitted from a right side surface of the inspected object. When the inspected object is moved by the second sub-conveying apparatus, the radiation beam may scan the entire inspected object, such that all information of the inspected object when being irradiated from the right side of the inspected object is obtained. The information in the first inspection channel segment 21 and the information in the second inspection channel segment 22 are then combined and processed to construct a computed tomography image of the inspected object. The security inspection apparatus of the present embodiment is advantageous, since the inspection channel 2 has two parts extending in the horizontal and vertical directions, and thus the radiation beam may be incident on the inspected object from two directions or orientations, i.e., the top side (the upper side) and the side face (between the top side and the bottom side) of the inspected object, such that the inspected object is irradiated and transmitted by the radiation beam in all directions or orientations to obtain a complete cross-sectional image of the inspected object. In the present embodiment, the ray source 1 may be an accelerator, for example, a single-energy X-ray accelerator, a dual-energy X-ray accelerator, a multi-energy spectrum X-ray accelerator or the like, which has a large volume and weight, and is inconvenient to be moved. The present embodiment allows, for example, the ray source 1 of the accelerator to be fixed in one position or not moved greatly, thereby allowing a friendly inspection process for an operator.

The present embodiment is particularly advantageous when inspecting an object such as a container, since the object like the container is long, and the radiation beam is difficult to penetrate the container along a length of the container. However, the solution provided by the present embodiment allows an irradiation of the radiation beam from a top side and a side face of the container (rather than from an end portion in a length direction), and an inspection of a large-sized container may be completed at one time, improving the inspection efficiency while obtaining a clear cross-sectional image. Specifically, the first inspection channel segment 21 and the second inspection channel segment 22 extend in the straight line, that is, the inspected object is conveyed by the conveying apparatuses in the inspection channel segments in the straight line. It is advantageous to convey the object in the straight line, since the inspected object may be, for example, the container, which is large in size, when the container is conveyed in the straight line and the container passes through the radiation beam (here, the radiation beam is emitted by the radiation source and the radiation beam is fixed), various parts of the container are allowed to pass through the radiation beam, and the detector which is also fixed receives the radiation transmitted through the container so as to complete scanning of an entire container and construct an entire image of the container. In the embodiment shown in FIG. 1, for example, the inspected object is, for example, a 40-foot container having a length of 11.8m, a width of 2.13m, and a height of 2.18m. When the security inspection is performed on the container, the container is placed on the first sub-conveying apparatus, and the length direction thereof is in the X direction, such that the length direction is still in the X direction when the container enters the second inspection channel segment 22. One side surface of the container directly faces the radiation beam so as to prevent an end surface of the container from directly facing the radiation beam. The length of the container does not allow the radiation beam to irradiate the container from one end surface of the container, since the radiation beam is difficult to penetrate the container in the length direction.

For an object of a moderate volume, if a radiation beam may irradiate and penetrate an object from two side surfaces of the object perpendicular to each other, an inspection channel segment may be arranged in a horizontal plane. Thus, in an embodiment of the present disclosure, the inspection channel 2 includes a plurality of inspection channel segments, and the plurality of inspection channel segments are arranged in a horizontal plane, for example, both the two inspection channel segments in the above embodiment are arranged in a horizontal plane.

In the present embodiment, the inspection channel 2 is represented by a shaded closed space in FIG. 1. However, in fact, the inspection channel 2 may not be a substantial component, that is, when the inspected object is located between the ray source 1 and the detector, the ray source 1 emits a ray to irradiate the inspected object, the detector receives the ray penetrating the inspected object to perform the inspection to the inspected object, and the inspection channel 2 is defined between the ray source 1 and the detector. In some embodiments, in order to prevent a ray from damaging the surrounding human bodies or other targets, a housing or enclosure may be provided to enclose the source and the detector and prevent the ray from scattering to an outside of the housing or enclosure. The conveying apparatus may be a conveyor belt, a conveyor chain, a trolley, a lift, etc. For example, the conveying apparatus may be composed of a plurality of trolleys, and each trolley is a sub-conveying apparatus in the present disclosure, or the conveying apparatus is composed of a plurality of conveyor belts, and each conveyor belt is a sub-conveying apparatus.

According to the present disclosure, there may be various embodiments of the sub-conveying apparatus.

In an embodiment, each of the plurality of sub-conveying apparatuses includes a hollow bracket for supporting the inspected object, the hollow bracket has two ends for supporting the inspected object and a middle hollow portion, and a length direction of the hollow bracket may be adjusted according to a length of the inspected object, such that the inspected object is only supported on the two ends of the hollow bracket during inspection. The length direction of the hollow bracket is perpendicular to the conveying direction of the plurality of sub-conveying apparatuss, that is, in the drawing, the length direction of the hollow bracket is in the X direction. The hollow bracket may be moved by a mobile apparatus such as a trolley or a crane.

For example, in an embodiment, a sub-conveying apparatus is a trolley, which includes a hollow bracket and wheels mounted on the hollow bracket. The container is supported on the hollow bracket, and the length of the hollow bracket may be adjusted to adapt to containers of different specifications. Only small parts at two ends of the container are supported on the hollow bracket, other parts of the container are not blocked, the radiation beam may penetrate the container from a side of the container, and the detector may receive the radiation beam from an opposite side of the container. The length direction of the hollow bracket is in the X direction, which facilitates supporting the two ends of the container.

In an embodiment, the conveying apparatus includes a plurality of trolleys, and each of the trolleys may be a sub-conveying apparatus capable of translating within a horizontal inspection channel segment. For example, in an embodiment where a conveying channel is arranged in a horizontal plane, the conveying apparatus in the conveying channel is a trolley. In an embodiment, the conveying apparatus may further include a lift arranged within an inspection channel segment extending in the vertical direction. The trolley and the lift have a hollow bracket having two bearing ends. For example, two ends of the inspected object (for example, the container) are placed on the two bearing ends of the hollow bracket of the trolley, such that the length direction of the container is parallel to the X direction, and other parts of the container are not blocked.

In an embodiment, the conveying apparatus includes a crane. For example, when the inspected object is the container, it is advantageous that the conveying apparatus is a crane. The crane may translate and/or lift/drop the container by means of suspension. For example, a hook of the crane may directly hook a lifting ring on the container, then a translation in the horizontal direction is performed, and a lift/drop in the vertical direction may also be performed. In the present embodiment, the use of the crane will not block the ray, and a crane on site may be used, which facilitates operation.

In the arrangement shown in FIG. 1, the first sub-conveying apparatus within the first inspection channel segment 21 and the second sub-conveying apparatus within the second inspection channel segment 22 both convey the object in the straight line, and the conveying directions thereof form a right angle. Specifically, the first sub-conveying apparatus arranged in the horizontal direction may be, for example, a belt conveying apparatus arranged in the horizontal direction, and the second sub-conveying apparatus arranged in the vertical direction may be a lift arranged in the vertical direction. The inspected object may be, for example, the container. The container is firstly conveyed in the horizontal direction by the belt conveying apparatus arranged in the horizontal direction, passing through the first inspection channel segment 21, and then, the container is conveyed in the vertical direction by the lift arranged in the vertical direction. In the process, the absolute direction or orientation of the container is not changed, for example, the length direction is in the X direction. It should be noted that the container may be arranged in other directions according to an actual situation. For example, the length direction of the container is deviated from the X direction by an angle.

Herein, the container refers to a standard container, for example, the 40-foot container mentioned above, or it may also refer to a 20-foot container, or a container under European, American and other national standards. A large inspected object like a container is not convenient to be transferred or conveyed, and it is not as flexibly rotatable as a small object. When a radiation irradiates a large object like the container from one end of the container in the length direction, it is difficult to obtain a good image, and it is more difficult to obtain a computed tomography image, and thus it is avoided to irradiate the container from the end of the container. However, according to the present embodiment, it is advantageous to keep the absolute direction or orientation thereof unchanged during inspection on the large inspected object, and this makes the inspection process much friendlier to the operator. The inspection channel 2 includes the first inspection channel segment 21 extending in the horizontal direction and the second inspection channel segment 22 extending in the vertical direction, and the absolute direction or orientation of the container is not changed, such that the top side of the container directly faces the radiation when the container is in the first inspection channel segment 21, and a vertical side surface of the container directly faces the radiation when the container is the second inspection channel segment 22 extending in the vertical direction. Therefore, in the whole inspection process, the radiation may be irradiated on the container from at least two directions, so as to obtain more comprehensive inspection information, and realize the computed tomography imaging through an image processing by a processor. It should be noted here that the technology of obtaining a cross-sectional image by processing image information obtained from incident radiation beams in different directions or orientations may be obtained in the prior art, which will not be described here.

In FIG. 1, the radiation source may be rotated as shown in the drawing (in a counterclockwise direction, following a trajectory direction in which the inspected object is conveyed), that is, in the security inspection device shown in FIG. 1, the radiation source for irradiating the first inspection channel segment 21 and the radiation source for irradiating the second inspection channel segment 22 may share one same radiation source. In this way, the number of radiation sources may be reduced, a device cost may be reduced, and an energy difference caused by using the same radiation source is small compared to using two radiation sources for respective irradiations. A rotation of the radiation source may be implemented by conventional mechanical means. In the present embodiment, the detector may be a detector array arranged on the bottom side of the first inspection channel segment 21 and the right side of the second inspection channel segment 22.

FIG. 2 shows a part of an embodiment of the present disclosure. In FIG. 2, the first inspection channel segment 21 extending in the horizontal direction is arranged on an upper part of FIG. 2, the inspected object is first conveyed in the horizontal direction, and the radiation beam is incident from the bottom side of the container. Then, the container is conveyed from top to bottom in the lift within the second inspection channel segment 22, the radiation beam is incident from one side surface (between the top side and the bottom side) of the container and exit from another side surface of the container. When the container is conveyed in the inspection channel 2, the radiation beam sweeps over the container, obtaining transmission radiation information of the container irradiated from two directions, and constructing a computed tomography image of the container, such as a computed tomography scan image of the container. In the embodiment of FIG. 2, the radiation source may be rotated. The ray source is rotated clockwise according to a movement of the container from left to right, and then from top to bottom.

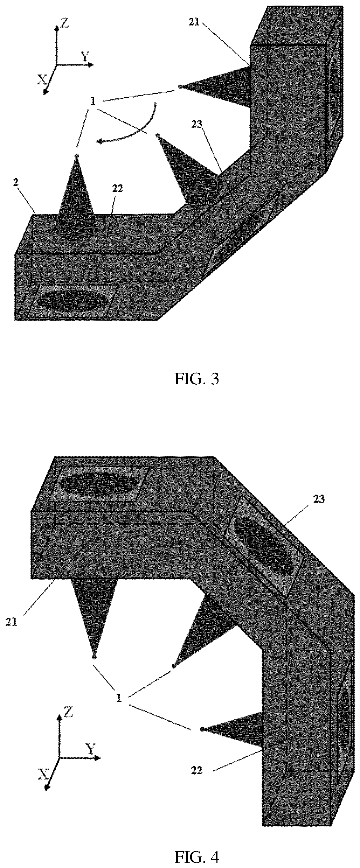

FIG. 3 shows a part of an embodiment of the present disclosure. The inspection channel 2 includes three inspection channel segments, i.e., a first inspection channel segment 22 extending in the horizontal direction, a second inspection channel segment 21 extending in the vertical direction, and a third inspection channel segment 23 located between the first inspection channel segment 22 and the second inspection channel segment 21. As shown in FIG. 3, the third inspection channel segment 23 is arranged in an inclined direction, or in other words, the first inspection channel segment 22 and the second inspection channel segment 21 form a right angle, while the first inspection channel segment 22 and the third inspection channel segment 23 form an obtuse angle. In the present embodiment, the inspected object, such as a container, is conveyed from top to bottom from the second inspection channel segment 21, the radiation beam of the radiation source is incident from an end (between a top side and a bottom side) of the container, and exit from another end. Then, the container enters the third inspection channel segment 23, and the radiation source is rotated, such that the radiation beam irradiates the container from a diagonal upper side of the container. Finally, the container enters the first inspection channel segment 22, and the radiation source continues to be rotated clockwise, such that the radiation beam directly faces the top side of the container and irradiates the container. The container is irradiated from three angles through the three inspection channel segments, such that three kinds of cross-sectional scan images transmitting the container are obtained, and a computed tomography image of the container is finally constructed.

FIG. 4 shows a part of an embodiment of the present disclosure. The inspection channel 2 includes three inspection channel segments, i.e., a first inspection channel segment 21 extending in the horizontal direction, a second inspection channel segment 22 extending in the vertical direction, and a third inspection channel segment 23 located between the first inspection channel segment 21 and the second inspection channel segment 22. As shown in FIG. 4, the third inspection channel segment 23 is arranged in an inclined direction, or in other words, the first inspection channel segment 21 and the second inspection channel segment 22 form a right angle, while the first inspection channel segment 21 and the third inspection channel segment 23 form an obtuse angle. Here, the inspection channel 2 is arranged in a vertical plane. In the present embodiment, the inspected object, such as a container, enters the first inspection segment 21 and is conveyed in the horizontal direction, and the radiation beam of the radiation source is incident from the bottom side of the container, and exit from the top side. Then, the container enters the third inspection channel segment 23, the radiation source emits a radiation beam irradiating the container from a diagonal lower side of the container. Finally, the container enters the second inspection channel segment 22, and the radiation beam directly faces a side surface between the top side and the bottom side of the container and irradiates the container. The container is irradiated from three angles through the three inspection channel segments, such that three kinds of cross-sectional scan images transmitting the container are obtained, and a computed tomography image of the container is finally constructed. In the present embodiment, the radiation sources may be three radiation sources, and each of the radiation sources irradiates one inspection channel segment.

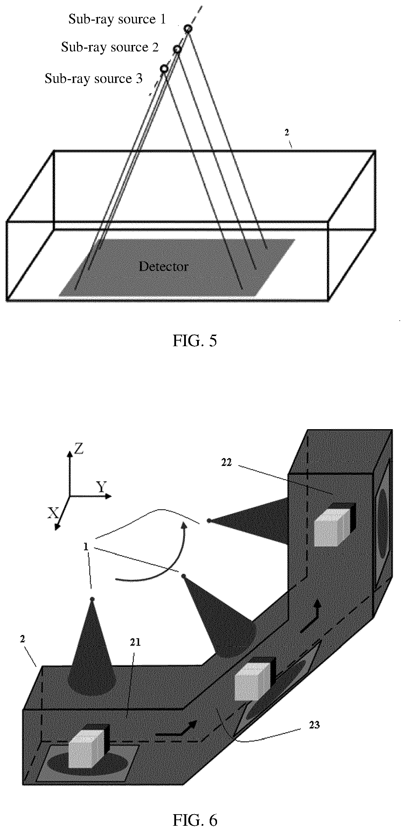

According to an embodiment of the present disclosure, the radiation source may be a radiation source array. The ray source 1 is configured with a plurality of sub-ray sources, and the plurality of sub-ray sources are arranged in directions substantially transverse or perpendicular to an extending direction of the inspection channel 2 so as to cover a part or all of a transverse range of the inspection channel segment. In an embodiment, opening angles spanned by the plurality of sub-ray sources in the extending direction of the inspection channel segment may be the same. Here, it should be noted that the plurality of sub-ray sources are not necessarily arranged in the direction perpendicular to the extending direction. For example, the inspection may also be completed by an arrangement in a direction substantially perpendicular to the extending direction, or even by an arrangement in a diagonal direction of the extending direction. Specifically, as shown in FIG. 5, FIG. 5 shows the first inspection channel segment 21 of the inspection channel 2 in FIG. 1, i.e., the first inspection channel segment 21 extending in the Y direction (the horizontal direction). The ray source 1 includes a sub-ray source 11, a sub-ray source 12 and a sub-ray source 13 arranged in the X direction, i.e., in the direction perpendicular to the extending direction of the inspection channel 2. When the inspected object such as the container passes through the first inspection channel segment 21 in the Y direction, the length direction of the container may be arranged in the X direction, such that the container may pass through the first inspection channel segment 21 one time to complete a scan of the entire container, which is conducive to improving inspection efficiency. In the art, the ray source 1 generally may not achieve large opening angles in two directions. As shown in FIG. 4, the sub-ray source 11 has a larger opening angle in a moving direction of the inspected object, and has a smaller opening angle in a direction transverse to the moving direction of the inspected object. According to the present embodiment, the ray source includes a sub-ray source 11, a sub-ray source 12, and a sub-ray source 13, each of the sub-ray source 11, the sub-ray source 12, and the sub-ray source 13 is provided with a larger opening angle in the moving direction (Y direction) of the container and a smaller opening angle in the direction transverse to the moving direction of the container. The sub-ray source 11, the sub-ray source 12 and the sub-ray source 13 are arranged in the X direction so as to cover a part or all of the container in the X direction. The length direction of the container may be in the X direction.

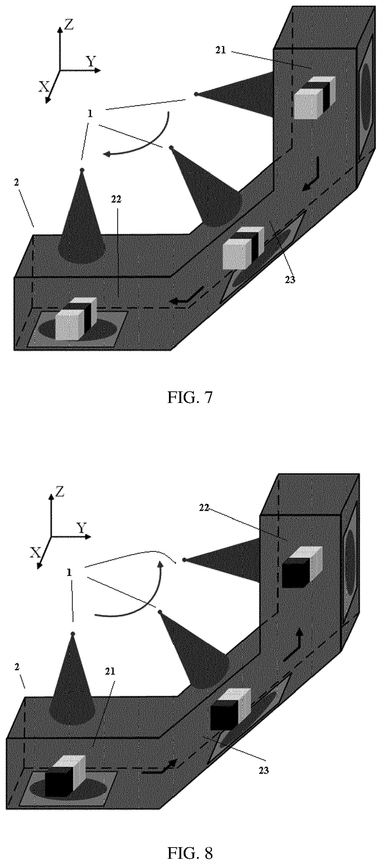

FIG. 6 - FIG. 8 show an embodiment of the present disclosure. In the present embodiment, the radiation source may be rotated counterclockwise, and the radiation source and the detector array collecting the radiation beam may be moved in the X direction (i.e., the direction perpendicular to the moving direction of the inspected object). As shown in FIG. 6, the inspected object such as the container is placed in the first inspection channel segment 21, and the length direction of the container is arranged in the X direction. The container has a large length, and thus a single pass of the container through the inspection channel segment may only allow the radiation beam to scan a part of the container. FIG. 6 schematically shows that the radiation beam covers only one-third (blacked part) of the length direction of the container. As shown in FIG. 6, in the present embodiment, the container first passes through the first inspection channel segment 21, the radiation beam irradiates from the top side of the container and penetrates the container, one-third of the length direction of the container is scanned by the radiation beam. Then, the container enters the third inspection channel segment 23, the radiation source is rotated such that the radiation beam irradiates one-third of the container from a diagonal upper side of the container. Finally, the container enters the second inspection channel segment 22, the radiation source continues to be rotated such that the radiation beam irradiates one-third of the container from a side surface of the container. When the container is conveyed to a tail end of the inspection channel 2, the radiation beam and the correspondingly arranged detector array are moved in the X direction, such that the radiation beam may irradiate a second one-third of the length direction of the container (the middle portion as shown in the drawing). As shown in FIG. 7, the container is conveyed within the inspection channel 2 along the second inspection channel segment 22 towards the third inspection channel segment 23, and finally towards the first inspection channel segment 21, and the radiation source is rotated clockwise. Similarly, the second one-third section of the container is scanned by the radiation beam in the second inspection channel segment 22, the third inspection channel segment 23 and the first inspection channel segment 21, respectively. When the container is conveyed to a tail end of the inspection channel 2 (a starting end of the first inspection channel segment 21), the radiation source and the detector array are moved in the X direction so as to irradiate a third one-third section of the length direction of the container. As shown in FIG. 8, the container is conveyed again along the direction of the first inspection channel segment 21, the third inspection channel segment 23 and the second inspection channel segment 22, while the radiation source is rotated counterclockwise to complete a radiation scan of the third one-third section of the container (the blacked part of the container in FIG. 8). Finally, all scan results are synthesized to reconstruct the computed tomography image of the container. According to other embodiments of the present disclosure, the radiation source may include a plurality of sources arranged in the length direction of the container and sufficient to cover an entire length range of the container, such that the container may be entirely scanned when passing through the radiation beam at one time, thereby improving the security inspection efficiency.

In the above embodiment, the inspection channel segment arranged in the Y direction is referred to as the first inspection channel segment 21, the inspection channel segment arranged in the Z direction is referred to as the second inspection channel segment 22, and the inspection channel segment located between the first inspection channel segment 21 the second inspection channel segment 22 is referred to as the third inspection channel segment 23. It should be noted that the use of the expressions first, second and third is not intended to indicate an order, but only to distinguish different inspection channel segments.

In the above embodiment, an included angle between the third inspection channel segment 23 and the first inspection channel segment 21 is generally set to be 135 degrees, which is beneficial to constructing the computed tomography image. The third inspection channel segment 23 may have another included angle with the first inspection channel segment 21, such as a 150-degree included angle, a 120-degree included angle and another included angle. The included angles may facilitate a more sufficient irradiation of the inspected object by the radiation beam, beneficial to reconstructing the computed tomography image, and also beneficial to a convenience of reconstructing calculation.

In other embodiments of the present disclosure, the inspection channel 2 includes four, five, ... N inspection channel segments, and N is an integer of 2 or greater. In an embodiment where more inspection channel segments are provided, the radiation beam may irradiate the inspection channel segments from more directions or orientations.

In the above embodiment, the included angle between the first inspection channel segment 21 and the second inspection channel segment 22 (i.e., the first and the last inspection channel segments) is illustrated as 90 degrees, which is advantageous. The arrangement according to the present embodiment may allow the radiation beam to irradiate longitudinal and transverse directions of the inspected object from at least two directions or orientations, so as to satisfy requirements of constructing the computed tomography image of the inspected object, while improving the security inspection efficiency with less scan times. In other embodiments of the present disclosure, an included angle between a first inspection channel segment and a last inspection channel segment may be 180 degrees, 270 degrees, even 360 degrees or other included angles. Moreover, a first starting inspection channel segment may not be in the horizontal direction (the Y direction in the previous drawing). For example, in an embodiment of the present disclosure, the inspected object, such as the container, may first enter the inspection channel 2 from the vertical inspection channel segment in the inspection channel 2, and then pass through the horizontal segment in the inspection channel 2.

In the above embodiment, the included angle between the first inspection channel segment 21 and the second inspection channel segment 22 (i.e., between the first and the last inspection channel segments) is illustrated as 90 degrees, and the second inspection channel segment 22 extends in the vertical direction (the Z direction as shown). However, in other embodiments of the present disclosure, a plurality of inspection channel segments may be arranged in a plane defined by the XY directions, for example, the horizontal plane, and may include N inspection channel segments. Here, N is an integer of 2 or greater. The present embodiment is applicable for a small-volume inspected object or a substantially square inspected object (i.e., lengths in two directions are not too long, which satisfies a penetration imaging of the radiation beam).

In the embodiment shown in FIG. 6 - FIG. 8, the security inspection device is arranged to be reciprocated in the entire inspection channel 2, and after a scan of a part (e.g., a one-third section) of the inspected object in the entire inspection channel 2 is completed once, the radiation source and the corresponding detector array are moved to complete a scan of a part (e.g., a one-third section) of the inspected object in the entire inspection channel 2 once again. However, in the embodiment of the present disclosure, the security inspection device may be arranged in one inspection channel segment, and the inspected object is reciprocated a plurality of times, for example, three times, such that a one-third of the inspected object is scanned at each conveying, and after all of the inspected object is scanned, the inspected object is conveyed to the next inspection channel segment to be reciprocated.

For example, in the above embodiment shown in FIG. 6 - FIG. 8, the inspected object is illustrated as the container. According to the embodiment of the present disclosure, the container may be, for example, a 20-foot standard container, a 40-foot standard container, or a 45-foot high container, and it may also be a container of other specifications, such as a standard container according to European standard or American standard. The inspected object may also be another large article of a regular or irregular shape, such as a large package, a luggage, and even a commodity like an automobile. The present embodiment may allow a large volume article to undergo an inspection and obtain a good computed tomography image. For example, in the embodiment shown in FIG. 6 - FIG. 8, the radiation source is illustrated as a point, however, it should be understood that the radiation source may be an array of sources, such as the arrangement of the sub-ray source 11, the sub-ray source 12 and the sub-ray source 13 shown in FIG. 5.

According to the embodiment of the present disclosure, there is provided a security inspection device, including: a ray source 1 configured to emit a ray beam; a detector configured to receive the ray beam, an inspection channel 2 is defined between the ray source 1 and the detector, wherein the inspection channel 2 includes N inspection channel segments, the N inspection channel segments are successively arranged such that an inspected object is conveyed in the inspection channel 2, and an angle greater than zero is formed between extending directions of at least two of the N inspection channel segments. For example, an angle greater than zero is formed between an extending direction of a first inspection channel segment 2 and an extending direction of a last inspection channel segment of the N inspection channel segments, wherein N is an integer of 2 or greater; and a conveying apparatus provided on the inspection channel 2 for conveying the inspected object.

In an embodiment, the conveying apparatus includes a plurality of sub-conveying apparatuses, wherein at least one sub-conveying apparatus is provided in each of the N inspection channel segments, and the plurality of sub-conveying apparatuses are configured to sequentially convey the inspected object within the inspection channel 2. An absolute direction or orientation of the inspected object is kept unchanged during a process of being conveyed within the inspection channel 2. In an embodiment, the conveying apparatus may be a crane, and the crane may directly lift the inspected object to pass through the inspection channel. In an embodiment, the conveying apparatus may further include a trolley, and thus the conveying apparatus may be a combination of a trolley and a crane. Obviously, a lift/drop in the vertical direction is implemented by the crane.

In the embodiment of the present disclosure, the inspection channel 2 includes N inspection channel segments, and each of the inspection channel segments extends in a straight line. The extension of the inspection channel segment in the straight line here includes a meaning that the conveying apparatus in the inspection channel segment conveys the inspected object in a straight line. It is advantageous to convey the object in the straight line, since a computational process of obtaining an image through an algorithm is relatively simple.

In order to provide a radiation beam having a sufficient penetration power, the radiation source in the embodiment of the present disclosure may be an X-ray accelerator, including one or more of a single-energy X-ray accelerator, a dual-energy X-ray accelerator, or a multi-energy spectrum X-ray accelerator. An accelerator may alternately generate a variety of energy spectrum distributions (at present, the commonly used technology is 3MeV/6MeV or 6MeV/9Mev dual-energy scan).

In the embodiment of the present disclosure, the security inspection device may include a processor configured to synthesize the scan results of the N inspection channel segments so as to reconstruct the computed tomography (CT) image of the inspected object. The processor may have various functions, for example, the processor may also be configured to control the conveying apparatus to convey the inspected object, for example, to reciprocate the inspected object.

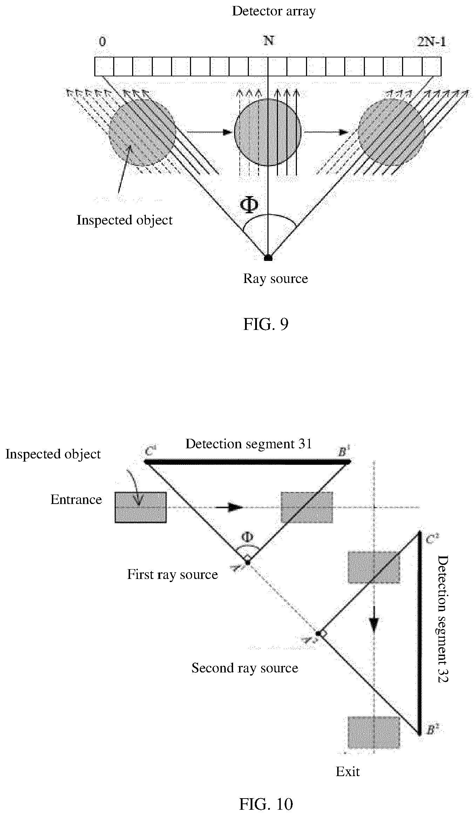

FIG. 9 schematically shows a scan diagram of an inspection channel segment. The ray source 1 and the detector array define the inspection channel segment, the detector array is arranged along the inspection channel segment, an opening angle of the ray source 1 spanning the extending direction of the inspection channel segment is Φ, and the inspected object is conveyed from an end of the inspection channel segment to the other end of the inspection channel segment. The opening angle of the ray source 1 being Φ may mean that the ray source 1 emits a fan-distributed radiation beam having an opening angle Φ, or the ray source 1 may emit a ray beam within a range of an opening angle Φ , for example, from left to right, and a scan of the ray beam sweeps the opening angle Φ. For example, as shown in FIG. 9, a collimated ray beam emitted by the ray source 1 only covers a part of an area within the field angle Φ shown in FIG. 9, the ray source 1 scans the field angle Φ from left to right through a collimator or another pre-collimating apparatus. When such ray source 1 is used, the inspected object may be stationary. When the radiation beam of the ray source 1 has a fan-distribution with the opening angle Φ , an entire cross section of the inspected object may be transmitted by the radiation beam as long as the inspected object passes through the ray beam.

FIG. 10 shows a schematic diagram of an arrangement of two inspection channel segments extending in a straight line. In the arrangement of FIG. 10, a first ray source and a second ray source are included, the inspected object enters a first inspection channel segment 21 to receive a scan of the first ray source, and then enters a second inspection channel segment 22 to receive a scan of the second ray source.

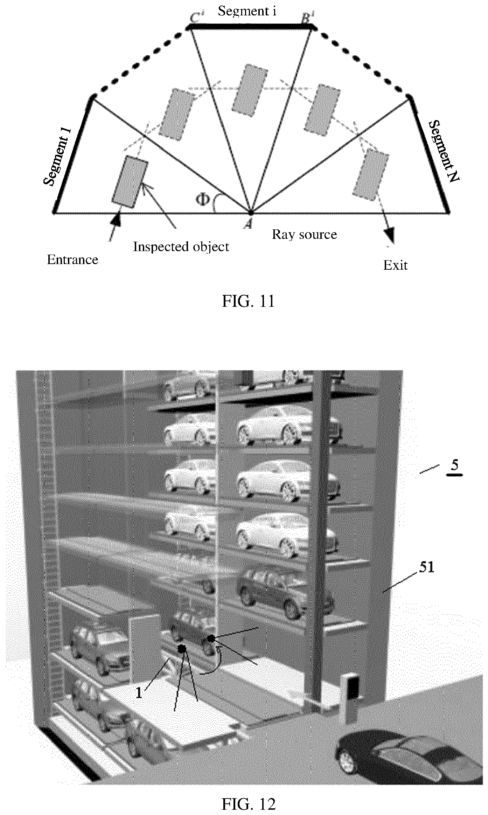

FIG. 11 shows a schematic diagram of an arrangement of N inspection channel segments extending in a straight line. The N inspection channel segments in FIG. 11 may be arranged in a horizontal plane. FIG. 11 schematically shows that an absolute direction or orientation of an inspected object is kept unchanged in each inspection channel segment. Thus, when the inspected object is in a first inspection channel segment, the ray is incident from a first side of the inspected object; when the inspected object is in a middle inspection channel segment, the radiation beam is incident substantially along an end portion of the inspected object; and when the inspected object is in a last inspection channel 2, the radiation beam is incident substantially along a second side of the inspected object opposite to the first side.

According to an aspect of the present disclosure, there is provided a security inspection method using the above security inspection device, the security inspection method includes: emitting, by using a ray source 1, a ray beam to irradiate an inspected object when the inspected object is sequentially conveyed in N inspection channel segments; using a detector to receive a radiation; and synthesizing a computed tomography image of the inspected object based on the radiation received by the detector.

The security inspection method further includes: placing the inspected object in a first inspection channel segment of the inspection channel 2, before emitting, by using the ray source 1, the ray beam to irradiate the inspected object, a short side of the inspected object is substantially parallel to an extending direction of the first inspection channel segment, or in other words, a length direction of the inspected object is perpendicular to a direction in which the inspected object is conveyed. For example, the inspected object is a container, and when the container is inspected, a length direction of the container is arranged in a direction perpendicular to a conveying direction.

The security inspection method of the present embodiment avoids translating or lifting/droping a cumbersome ray generating apparatus, such as the X-ray accelerator, and allows forming or constructing a CT image of a large-volume inspected object such as a container with a clear image and a simple operation. In some container yards or large product storage centers, it is even possible to use an on-site lifting/dropping apparatus to move a large object in a vertical plane. For example, the accelerator is placed on site, a mobile apparatus on site is used to translate and lift/drop the large object such as the container, and a radiation signal transmitted from a side surface of the large object and a radiation signal transmitted from a bottom face of the large object are obtained, respectively, so as to construct the CT image of the large object. Therefore, the security inspection method of the present embodiment greatly facilitates the security inspection operation and improves the on-site efficiency.

The present disclosure further provides a storage system, including: a storage shelf for storing articles, and the storage shelf is capable of moving any one of the articles to a predetermined position as required; and the security inspection device described above, wherein the inspection channel segments of the security inspection device are distributed in the storage shelf. The storage system allows any one of the articles to be moved to pass through at least two of the inspection channel segments extending in different directions.

FIG. 12 shows a storage system for automobiles, wherein the automobiles are parked in predetermined positions on the storage shelf. The storage shelf is provided with its own translating apparatus and lifting/dropping apparatus, and the automobile may be translated and lifted/dropped to any position of the storage shelf. In the present embodiment, for example, the security inspection device may include two inspection channel segments, one inspection channel segment extending in the horizontal direction, and one inspection channel segment extending in the vertical direction. It should be noted that, in order to simplify a complexity of the device, the security inspection device may be provided at an entrance of the storage system, and when entering the storage system, each automobile passes through the inspection channel segment extending in the horizontal direction and the inspection channel segment extending in the vertical direction for inspection. Thus, the security inspection device of the storage system does not complicate an entire structure of the storage system. Since the storage system is provided with the translating apparatus and the lifting/dropping apparatus, an addition of the security inspection device actually only adds a radiation source and a detector array, significantly enriching functions of the storage system while the structure does not become more complicated. The automobile is inspected during a process of being conveyed to a predetermined position, for example, whether carrying dangerous goods.

The storage system may include a separate processor for the security inspection device, and it may also include a storage system processor. They storage system processor may control the translating apparatus and the lifting/dropping apparatus to move and place the automobile, may also receive signals from the detector arrays on different inspection channel segments, and process the signals to obtain a cross-sectional image of the automobile. The security inspection device may be arranged in other suitable positions of the storage system, which may be selected according to the structure of the storage system and the user's needs. Those skilled in the art may arrange the security inspection device in any position of the storage system.

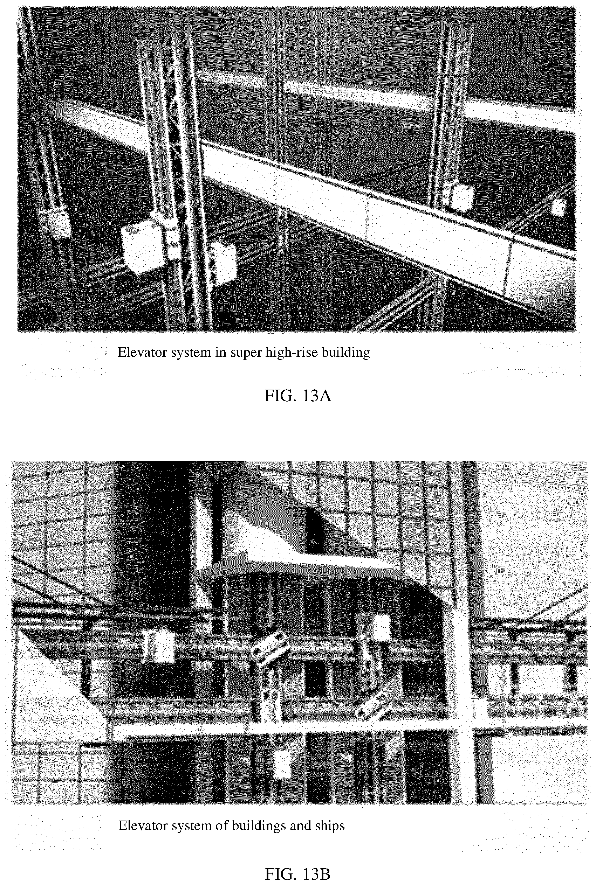

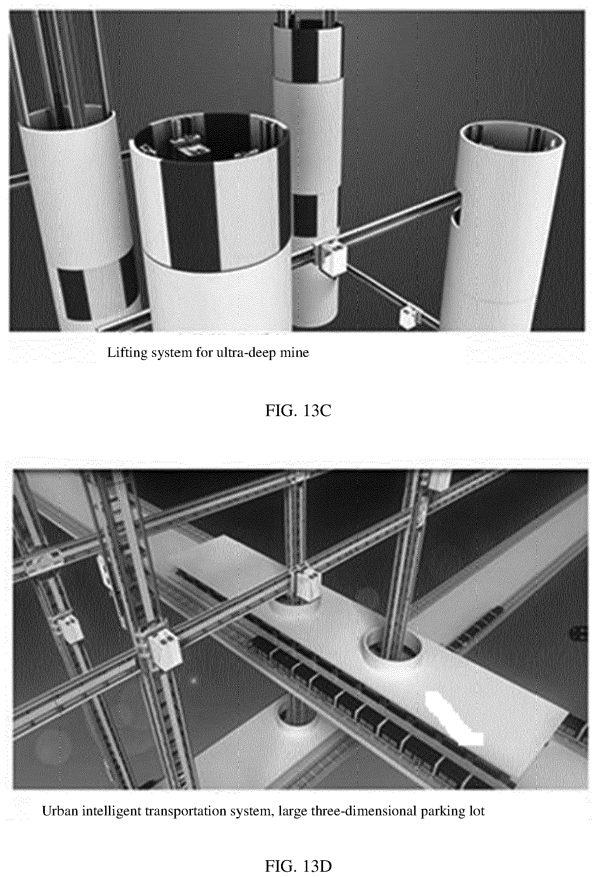

The storage system provided by the present disclosure may be the storage system for automobiles described above, such as a warehouse for storing automobile products, or a warehouse for large ship cabins, and the articles may be other containers, large products, etc.; the storage system may also be a multi-storey or three-dimensional parking garage, it may further be a building or ship system with its own elevator system, and may yet be a deep well with its own lifting system, as shown in FIG. 13A - FIG. 13D. In these systems, the plurality of inspection channel segments of the security inspection device may be arranged in appropriate positions of the storage system, which may be set according to on-site conditions of the system or the user's needs. Those skilled in the art may arrange the security inspection device in any position of the system.

The principle of the CT imaging is well known to those skilled in the art, and will not be repeated here.

Those skilled in the art may understand that the embodiments described above are all exemplary, those skilled in the art may make improvements to them, and the structures described in various embodiments may be freely combined in the case that no structural or principle conflict occurs.

The present disclosure is described with reference to the accompanying drawings, however, the embodiments disclosed in the accompanying drawings are intended to illustrate the embodiments of the present disclosure and should not be construed as limiting the present disclosure.

Some embodiments of the present general inventive concept have been shown and described, however, those skilled in the art should understand that modifications may be made to these embodiments without departing from the principle and spirit of the present general inventive concept, and the scope of the present disclosure is defined by the claims and their equivalents.

It should be noted that the wording "include" does not exclude other elements or steps, and the wording "a" or "an" does not exclude plurality; "above" or "below" is only intended to indicate a direction or orientation of a component in an illustrated structure, rather than limiting an absolute direction or orientation thereof; and "first" and "second" are used for distinguishing names of different components, rather than ranking or indicating an importance or priority. Additionally, a reference sign of any element in the claims should not be construed as limiting the scope of the present disclosure.

## Claims

1. A security inspection device, comprising:
a ray source configured to emit a ray beam;
a detector configured to receive the ray beam, wherein an inspection channel is defined between the ray source and the detector, wherein the inspection channel comprises N inspection channel segments, the N inspection channel segments are successively arranged such that an inspected object is conveyed in the N inspection channel segments, an angle greater than zero is formed between extending directions of at least two inspection channel segments of the N inspection channel segments, and wherein N is an integer of 2 or greater than 2; and
a conveying apparatus configured to convey the inspected object on the inspection channel, wherein an absolute direction or orientation of the inspected object is kept unchanged during a process of being conveyed within the inspection channel.

2. The security inspection device according to claim 1, wherein the conveying apparatus comprises a plurality of sub-conveying apparatuses, wherein at least one sub-conveying apparatus is provided in each of the N inspection channel segments, and the plurality of sub-conveying apparatuses are configured to sequentially convey the inspected object within the inspection channel.

3. The security inspection device according to claim 1, wherein the inspection channel comprises a first inspection channel segment extending in a horizontal direction, and a second inspection channel segment extending in a vertical direction.

4. The security inspection device according to claim 3, wherein the inspection channel comprises a third inspection channel segment, the third inspection channel segment is obliquely arranged between the first inspection channel segment and the second inspection channel segment and connecting the first inspection channel segment with the second inspection channel segment.

5. The security inspection device according to claim 4, wherein the third inspection channel segment is at a 135 degree angle to the first inspection channel segment.

6. The security inspection device according to claim 1, wherein the ray source is configured to be rotatable and/or translatable so as to be able to emit the ray beam directly facing each N inspection channel segment, respectively, through rotation and/or translation.

7. The security inspection device according to claim 1, wherein each of the plurality of sub-conveying apparatuses comprises a hollow bracket for supporting the inspected object, the hollow bracket has two ends for supporting the inspected object and a middle hollow portion, a length direction of the hollow bracket may be adjusted according to a length of the inspected object such that the inspected object is only supported on the two ends of the hollow bracket during inspection; and
the length direction of the hollow bracket is perpendicular to a conveying direction of the plurality of sub-conveying apparatuses.

8. The security inspection device according to claim 1, wherein the plurality of sub-conveying apparatuses comprise a crane configured to translate and/or lift/drop the inspected object by means of suspension.

9. The security inspection device according to claim 8, wherein the plurality of sub-conveying apparatuses comprise a cart configured to translate the hollow bracket.

10. The security inspection device according to claim 6, wherein the ray source is provided with a plurality of sub-ray sources, and the plurality of sub-ray sources are arranged in a direction substantially perpendicular to an extending direction of the inspection channel so as to cover a part or all of a transverse range of the inspection channel segments.

11. The security inspection device according to claim 1, wherein the security inspection device comprises a plurality of ray sources, and each of the N inspection channel segments is provided with one ray source.

12. The security inspection device according to claim 11, wherein each of the plurality of ray sources is provided with a plurality of sub-ray sources, the plurality of sub-ray sources are arranged in a direction transverse to the extending direction of the inspection channel so as to cover a part or all of a transverse range of the inspection channel segments.

13. The security inspection device according to claim 1, wherein the detector comprises a plurality of detector arrays, and each inspection channel segment is provided with at least one detector array so as to receive the ray beam penetrating the inspected object.

14. The security inspection device according to claim 13, wherein the detector arrays are movable in a direction perpendicular to a movement direction of the inspected object.

15. The security inspection device according to claim 1, wherein the ray source is an X-ray accelerator comprising one or more of a single-energy X-ray accelerator, a dual-energy X-ray accelerator, or a multi-energy spectrum X-ray accelerator.

16. The security inspection device according to claim 1, further comprising a processor configured to synthesize inspection results of the N inspection channel segments into a cross-sectional image of the inspected object.

17. The security inspection device according to claim 1, wherein the conveying apparatus is capable of reciprocating the inspected object.

18. The security inspection device according to claim 1, wherein the inspected object is a container.

19. A security inspection method using the security inspection device according to claim 1, wherein the security inspection method comprises:
conveying an inspected object sequentially in N inspection channel segments;
emitting, by using a ray source, a ray beam to irradiate the inspected object;
using a detector to receive a radiation; and
synthesizing a computed tomography image of the inspected object based on the radiation received by the detector.

20. The security inspection method according to claim 19, comprising:
placing the inspected object in a first inspection channel segment of the inspection channel before emitting, by using the ray source, the ray beam to irradiate the inspected object, and a short side of the inspected object is substantially parallel to an extending direction of the first inspection channel segment.

21. A storage system, comprising:
a storage shelf for storing articles, wherein the storage shelf is capable of moving any one of the articles to a predetermined position as required; and
the security inspection device according to claim 1, wherein inspection channel segments of the security inspection device are distributed in the storage shelf,
wherein the storage system allows any one of the articles to be moved to pass through at least two of the inspection channel segments extending in different directions.
